Europäisches Patentamt

European Patent Office

Office européen des brevets

(19)

(11) Veröffentlichungsnummer: **0 167 801 B1**

(12) **EUROPÄISCHE PATENTSCHRIFT**

(45) Veröffentlichungstag der Patentschrift: 27.02.91   (51) Int. Cl.⁵: **H04N 5/60**

(21) Anmeldenummer: 85106812.2

(22) Anmeldetag: 03.06.85

(54) Schaltungsanordnung für Mono-, Stereo-, oder Zweitonbetrieb bei einem Fernsehempfänger.

(30) Priorität: 07.07.84 DE 3425130

(43) Veröffentlichungstag der Anmeldung:
15.01.86 Patentblatt 86/03

(45) Bekanntmachung des Hinweises auf die
Patenterteilung:
27.02.91 Patentblatt 91/09

(84) Benannte Vertragsstaaten:
AT BE CH DE FR IT LI LU NL

(56) Entgegenhaltungen:

PATENT ABSTRACTS OF JAPAN, Band 5, Nr.
82 (E-59)[754], 29. Mai 1981; & JP-A-53 31 280
(HITACHI SEISAKUSHO K.K.) 30-03-1981

FERNSEH- & KINOTECHNIK, Band 37, Nr. 3,
März 1983, Seiten 103-108, Berlin, DE; U.
BUHSE et al.: "Einige Aspekte der HiFi-
Fernsehton-Übertragung mit zwei Tonträgern"

(73) Patentinhaber: **Blaupunkt-Werke GmbH**
**Robert-Bosch-Strasse 200**
**D-3200 Hildesheim(DE)**

(72) Erfinder: **Peters, Hans**
**Uhlandweg 13**
**D-3200 Hildesheim(DE)**

(74) Vertreter: **Eilers, Norbert, Dipl.-Phys.**
**Blaupunkt-Werke GmbH Robert-**
**Bosch-Strasse 200**
**D-3200 Hildesheim(DE)**

## Beschreibung

Die Erfindung betrifft eine Schaltungsanordnung für Mono-Stereo-, oder Zweitonbetrieb bei einem Fernsehempfänger, mit einer integrierten Schaltung zur Auswertung eines die jeweilige Tonbetriebsart kennzeichnenden Pilotträgers mit den Tonbetriebsarten zugeordneten Kenntönen bzw. Kennfrequenzen, wobei die integrierte Schaltung unter anderem einen Kenntonausgang, einen Kenntoneingang sowie einen Zwangsmonoeingang besitzt, insbesondere unter Verwendung der integrierten Schaltung TDA 4940.

Mit der Einführung des Zweikanal-Tonverfahrens bei der Fernsehübertragung ist es bekanntlich möglich geworden, neben Mono auch Stereo oder Zweiton als Betriebsarten vorzusehen, indem die NF-Signale auf zwei getrennte Übertragungskanäle aufgeteilt werden.

Während die Stereo-Sendungen die bekannten Qualitätsverbesserungen bei der Tonwiedergabe bewirken, eröffnet der Zweitonbetrieb z.B. die Möglichkeit, ausländische Spielfilme gleichzeitig im Originalton und synchronisiert in der jeweiligen Landessprache auszustrahlen.

Damit in dem Fernsehempfänger erkannt werden kann, welche Mehrkanal-Tonbetriebsart - Stereo, Zweiton oder Mono - jeweils vorliegt, wird die eingangs genannte Schaltungsanordnung benötigt. Bei dem bekannten Zweikanal-Tonverfahren wird senderseitig (im zweiten Tonkanal) ein amplitudenmodulierter Pilotträger ausgestrahlt, dessen Kennton die jeweilige Tonbetriebsart angibt.

Es werden z.Zt. folgende Werte verwendet: Stereo-Kennfrequenz $f_{St}$ = 117 Hz; Zweiton-Kennfrequenz $f_{Zw}$ = 287 Hz. Der unmodulierte Pilotträger kennzeichnet den Mono-Betrieb.

Eine bekannte Schaltungsanordnung der eingangs genannten Gattung liegt in Form der integrierten Schaltung TDA 4940 vor, welche unter anderem einen Kenntonausgang, einen Kenntoneingang und einen Zwangsmonoeingang besitzt. Der Kenntoneingang ist über ein einen Bandpaß bildendes Netzwerk mit dem Kenntonausgang verbunden, um entsprechend der jeweiligen Kennfrequenz die richtige Tonbetriebsart einzustellen.

Wenn auch die bekannte integrierte Schaltung im Prinzip geeignet ist, die jeweilige richtige Tonbetriebsart zu erkennen und einzustellen, so ist doch in der Praxis bei den eingesetzten Schaltungen zu beobachten, daß es immer wieder zu Fehlschaltungen kommen kann, die für den Benutzer eines entsprechenden Fernsehempfängers nicht tragbar sind. Eine mögliche Fehlschaltung besteht beispielsweise darin, daß bei einer Mono-Sendung auf Stereo-oder Zweitonbetrieb geschaltet wird, was auf Störsignale am Kenntonausgang zurückzuführen ist.

Die Ursache für solche nachteiligen Fehlschaltungen ist unter anderem darin zu sehen, daß z.Zt. noch nicht alle Fernsehsender für das Zweikanal-Tonverfahren umgerüstet sind und daher nach wie vor nur einen Tonkanal übertragen können. Hier kann es bei Fernsehempfängern, die mit der bekannten Schaltungsanordnung für Mono-, Stereo-oder Zweitonbetrieb ausgerüstst sind, bei hohem Modulationsgrad innerhalb der Schaltungsanordnung zu einem Übersprechen kommen, welches durch den "offenen" Ton-ZF-Verstärker für den zweiten Tonkanal verursacht wird. Auch durch Restbildinhalte kann eine unerwünschte Beeinflussung des offenen zweiten Ton-ZF-Verstärkers stattfinden. Als Folge davon "produziert" der offene zweite Ton-ZF-Verstärker - trotz des herrschenden Monobetriebs - Störsignale an dem Kenntonausgang, die Fehlinformationen darstellen, welche über den erwähnten Bandpaß zum Kenntoneingang gelangen und damit eine Fehlschaltung hervorrufen.

Wenn aufgrund einer solchen Fehlschaltung etwa der Stereobetrieb eingestellt wird, ist zwar in dem einen Tonkanal nach wie vor das gesendete Monosignal hörbar, der zweite Tonkanal macht sich daneben aber mit einem lauten störenden Rauschen bemerkbar.

Auch beim Empfang solcher Fernsehsender, die bereits für das Zweikanal-Tonverfahren geeignet sind und die NF-Signale auf zwei getrennten Kanälen übertragen können, sind beim praktischen Einsatz der bekannten Schaltungsanordnung Fehlschaltungen zu beobachten, und zwar vor allem bei schlechten Empfangsbedingungen, also bei einem geringen Antennensignal.

Wenn ein für das Zweikanal-Tonverfahren geeigneter Fernsehsender im Monobetrieb arbeitet, treten gleichwohl im zweiten Tonträger Signalanteile in Form von Rauschen und von Bildsignalen auf. Wie zuvor beschrieben, verursacht der offene zweite Ton-ZF-Verstärker auch in diesem Fall Störsignale am Kenntonausgang, wobei bei schwachen Antennensignalen die Rauschspannung größer als die Nutzspannung ist. Wenn die Störspannung Frequenzanteile der Kennfrequenzen für Stereo- oder Zweiton-Betrieb enthält, tritt die nachteilige Fehlschaltung ein.

Insgesamt kann man also feststellen, daß die zweifellos großen Vorteile, welche das Zweikanal-Tonverfahren beim Fernsehempfang bieten, durch die in der Praxis möglichen Fehlschaltungen leider zu einem gewissen Teil wieder aufgehoben werden.

Der Erfindung liegt die Aufgabe zugrunde, Fehlschaltungen bei der Einstellung der jeweiligen Tonbetriebsart sicher und mit einfachen Mitteln zu vermeiden.

Die Lösung dieser Aufgabe erfolgt bei der im Oberbegriff des Anspruchs 1 genannten Schaltungsanordnung dadurch, daß die Spannung am Kenntonausgang zur Ansteuerung eines Schalters herangezogen ist, durch welchen wahlweise der Kenntoneingang oder der Zwangsmonoeingang schaltbar sind, wodurch die Tonbetriebsart "Mono" einschaltbar ist.

Die Erfindung geht davon aus, daß nicht etwa die durch das Zweikanal-Tonverfahren geschaffenen "neuen" Tonbetriebsarten Stereo oder Zweiton die Schwachpunkte darstellen, sondern daß vor allem bei der Ausstrahlung einer Monosendung Probleme auftreten, empfängerseitig die Tonbetriebsart Mono automatisch mit Hilfe der Schaltungsanordnung einzustellen.

Hier schafft nun die Erfindung auf überraschend einfache Weise Abhilfe, indem die am Kenntonausgang vorhandene Störspannung zur Ansteuerung eines Schalter herangezogen wird, wobei dieser Schalter entweder den Kenntoneingang oder den Zwangsmonoeingang schalten kann, so daß die entsprechende Auswerteschaltung innerhalb der Schaltungsanordnung außer Betrieb ist, solange der zweite Tonträger fehlt und zwangsweise die Tonbetriebsart Mono eingeschaltet ist.

Aber auch bei senderseitigem Mehrkanal-Tonbetrieb (Stereo oder Zweiton), wenn also neben dem ersten Tonträger auch der zweite Tonträger vorhanden ist, greift die Erfindung wirksam ein. Falls nämlich die Antennenspannung etwa infolge schlechter Empfangsbedingungen abnimmt, erreicht die Störspannung (Rauschen) am Kenntonausgang einen Pegel, durch welchen der Schalter mit der oben schon beschriebenen Folgewirkung aktiviert wird.

So wie also die Störspannung am Kenntonausgang eine bestimmte Schwelle überschreitet, kann der erfindungsgemäße Schalter wirksam werden und zwangsweise die Tonbetriebsart Mono einschalten.

Als besonders vorteilhaft hat es sich erwiesen, die Spannung am Kenntonausgang gleichzurichten und den Schalter mit der gleichgerichteten Spannung anzusteuern. Für eine sichere Betriebsweise, die allen möglichen Konstellationen gerecht wird, ist es ferner vorteilhaft, den Kenntonausgang über einen Hochpaß mit dem Gleichrichter zu verbinden.

Um für den Gleichrichter preiswerte Dioden verwenden zu können, ist es zweckmäßig, dem Gleichrichter einen Verstärker vorzuschalten.

Der für die Erfindung wesentliche Schalter zum Schalten des Kenntoneinganges oder des Zwangsmonoeinganges besteht in zweckmäßiger Ausgestaltung der Erfindung aus einem elektronischen Schalter in Form eines Transistors, dessen Collektor entweder mit dem Zwangsmonoeingang oder mit dem Kenntoneingang verbunden ist.

Andere vorteilhafet Weiterbildungen und Ausgestaltungen der Erfindung sind den Unteransprüchen und der Zeichnung zu entnehmen.

Nachfolgend wird die Erfindung anhand der in der Zeichnung dargestellten Ausführungsbeispiele näher erläutert. Es zeigen:

Fig. 1    ein schematisches Prinzipschaltbild einer ersten Ausführungsform der erfindungsgemäßen Schaltungsanordnung,

Fig. 2    ein schematisches Prinzipschaltbild einer zweiten Ausführungsform der erfindungsgemäßen Schaltungsanordnung,

Fig. 3 + 4    jeweils ein konkretes Schaltbild der in Fig. 1 und 2 schematisch dargestellten erfindungswesentlichen Schaltungsteile.

In den zeichnerisch dargestellten Ausführungsbeispielen ist die bekannte integrierte Schaltung 20 (TDA 4940) zugrundegelegt, welche unter anderem einen Tristate-Ausgang 6, einen Zwangsmonoeingang 7, einen Kenntoneingang 11 sowie einen Kenntonausgang 16 besitzt. Die zuletzt genannten Bezugszeichen 6, 7, 11 und 16 stimmen mit den Pin-Nummern der integrierten Schaltung 20 überein.

In der ansich bekannten Anwendung der integrierten Schaltung 20 ist der Kenntoneingang 11 über ein Netzwerk mit dem Kenntonausgang 16 verbunden, wobei das Netzwerk einen Bandpaß bildet und die Kondensatoren 22, 24, 26 und den Widerstand 28 umfaßt.

Von dem Kenntonausgang 16, der innerhalb der integrierten Schaltung 20 mit einer Erkennungsschaltung für den Pilotträger verbunden ist, gelangen die die jeweilige Tonbetriebsart kennzeichnenden Signale zum Kenntoneingang 11, um die betreffende Tonbetriebsart einzustellen. An dem Tristate-Ausgang 6 sind demnach drei unterschiedliche Signale möglich, die jeweils eine der Tonbetriebsarten Mono, Stereo oder Zweiton charakterisieren.

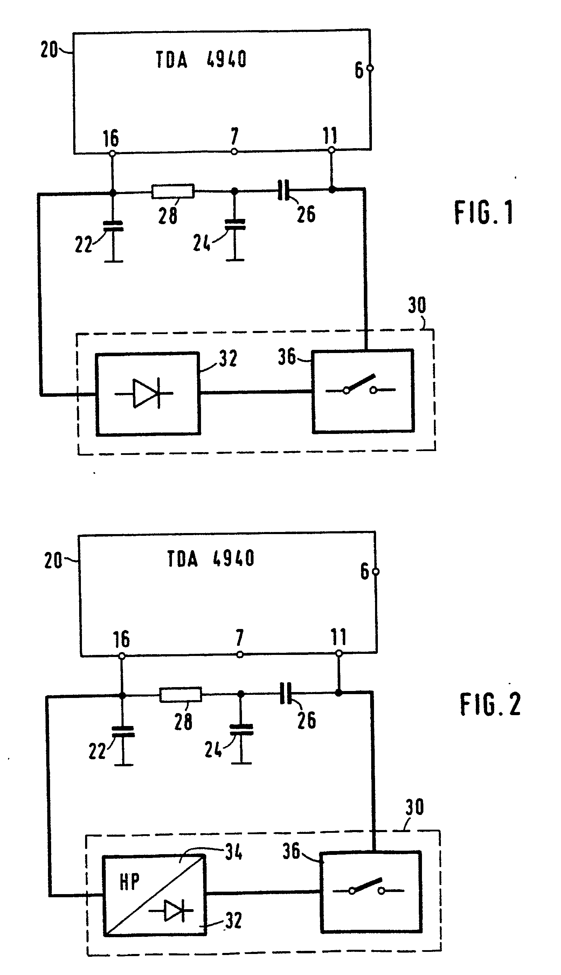

Der soweit beschriebene Schaltungsteil ist bekannt. Zur Verdeutlichung ist der erfindungsgemäße Teil in der Zeichnung in Fig. 1 und 2 mit dicken Linien dargestellt, wobei man diesen Schaltungsteil als eine externe Hilfsschaltung 30 auffassen kann.

In dem Ausführungsbeispiel gemäß Fig. 1 ist der Kenntonausgang 16 mit einem Gleichrichter 32 verbunden, dessen Ausgang zu einem Schalter 36 führt. Mit diesem Schalter 36 läßt sich der Kenntoneingang 11 stummschalten, mit der Folge, daß bei geschlossenem Schalter die Tonbetriebsart Mono eingeschaltet wird. Die gleiche Wirkung läßt sich auch erzielen, wenn der Schalter nicht mit dem Kenntoneingang 11 sondern mit dem Zwangsmonoeingang 7 verbunden wird.

Das in Fig. 2 schematisch dargestellte Ausführungsbeispiel der Erfindung unterscheidet sich von Fig. 1 dadurch, daß dem Gleichrichter 32 noch ein Hochpaß 34 vorgeschaltet ist. Dadurch wird eine besonders sichere Funktionsweise der Erfindung erzielt.

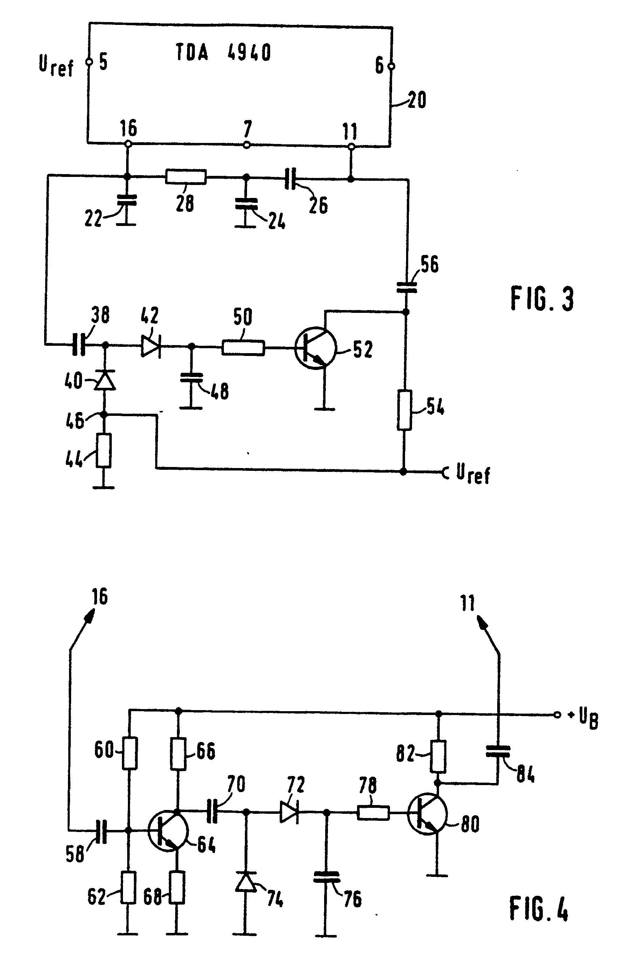

Nachfolgend sei angenommen, daß senderseitig ein Monosignal ausgestrahlt wird, daß der zweite Tonträger also fehlt. Wie weiter oben schon beschrieben, kann dann am Kenntonausgang 16 - unter anderem Verursacht durch den offenen zweiten Ton-ZF-Verstärker - ein Störsignal auftreten, welches etwa 4 mal größer als das Nutzsignal bei vorhandenem zweiten Tonträger ist. Dieses Störsignal wird entweder direkt oder über den Hochpaß 34 dem Gleichrichter 32 zugeführt, dessen Ladekondensator 48 bzw. 76 (vgl. Fig. 3 und 4) als Quelle für den Schalter 36 dient, welcher den Kenntoneingang 11 stummschaltet, so daß die zugehörige Auswerteschaltung außer Betrieb ist und zwangsweise die Tonbetriebsart Mono eingeschaltet ist, solange der zweite Tonträger fehlt.

In Fig. 3 ist ein konkretes Ausführungsbeispiel für die Hilfsschaltung 30 dargestellt. Dabei sind gleiche Teile aus Fig. 1 mit den gleichen Bezugszeichen versehen.

Der Kenntonausgang 16 ist mit einem Kondensator 38 verbunden, dessen dem Kenntoneingang 16 abgewandtes Ende über eine Diode 42 und einen Widerstand 50 zur Basis eines Transistors 52 führt, welcher eine Schalterfunktion ausübt. Zwischen der Diode 42 und dem Widerstand 50 befindet sich der nach Masse geschaltete Ladekondensator 48.

Zwischen dem Kondensator 38 und der Diode 42 ist eine weitere Diode 40 über einen Widerstand 42 nach Masse geschaltet, wobei der Fußpunkt 46 mit dem Anschluß 5 der integrierten Schaltung 20 verbunden ist, an welchem eine Referenzspannung $U_{ref}$ liegt. An diesen Anschluß 5 ist auch ein Arbeitswiderstand 54 angeschlossen, und schließlich ist der Collektor des Transistors 52 über einen Kondensator 56 mit dem Kenntoneingang 11 verbunden.

Die Fußspannung der Diode 40 am Fußpunkt 46 ermöglicht die Verwendung von Silizium-Dioden und bestimmt den Übergang von Mono auf Zweikanaltonbetrieb bei geringen Antennenspannungen. Mit abnehmender Antennenspannung und bei vorhandenem zweiten Tonträger erreicht die Störspannung (Rauschen) am Kenntonausgang 16 den Umschaltpegel, so daß über den als Schalter wirkenden Transistor 52 die Auswerteschaltung außer Betrieb gesetzt und auf Mono umgeschaltet wird.

In Fig. 4 ist aus Gründen der Übersichtlichkeit die integrierte Schaltung 20 nicht dargestellt. Die oberen Pfeile 16 und 11 sollen hier verdeutlichen, daß an diesen Stellen eine Verbindung mit dem Kenntonausgang 16 bzw. mit dem Kenntoneingang 11 besteht.

Abweichend von der Ausführungsform in Fig. 3 ist in Fig. 4 noch eine durch den Transistor 64 mit den Widerständen 60, 62, 66 und 68 gebildete Verstärkerstufe vorgesehen. Die Basis des Transistors 64 ist über einen Kondensator 58 mit dem Kenntonausgang 16 verbunden.

Über einen Kondensator 70 gelangt das verstärkte Signal von dem Collektor des Transistors 64 wiederum zu einer Gleichrichterschaltung (Dioden 72 und 74) mit dem Ladekondensator 76. Das kathodenseitige Ende der Diode 72 ist über einen Widerstand 78 mit einem wiederum als Schalter wirkenden Transistor 80 verbunden, dessen Emitter an Masse liegt, und dessen Collektor über einen Arbeitswiderstand mit einer Betriebsspannungsquelle $U_B$ verbunden ist, welche auch den Transistor 64 mit der Betriebsspannung versorgt. Über einen Koppelkondensator 84 besteht schließlich die Verbindung zu dem Kenntoneingang 11 der integrierten Schaltung 20.

Die Erfindung erlaubt eine sichere Beseitigung von eventuellen Fehlschaltungen der integrierten Schaltung 20 sowohl beim Betrieb ohne zweiten Tonträger als auch bei geringen Antennensignalen. Die zu diesem Zweck verwendete "externe" Hilfsschaltung 30 besitzt den Vorzug einer automatischen Umschaltung auf Monobetrieb ab einer bestimmten geringen Antennenspannung sowie bei fehlendem zweiten Tonträger. Die an sich bekannte und übliche externe Beschaltung der integrierten Schaltung 20 braucht dabei nicht verändert zu werden; es genügt, die erfindungsgemäße Hilfsschaltung zusätzlich zwischen dem Kenntonausgang 16 und dem Kenntoneingang 11 (oder dem Zwangsmonoeingang 7) vorzusehen.

Unter Bezugnahme auf Fig. 2 sei abschließend noch erwähnt, daß durch den Hochpaß 34 in vorteilhafter Weise eine Abtrennung der am Kenntonausgang 16 auftretenden Kenntöne und des NF-Rauschens erfolgt.

## Ansprüche

1. Schaltungsanordnung für Mono-, Stereo- oder Zweitonbetrieb bei einem Fernsehempfänger, mit einer integrierten Schaltung zur Auswertung eines die jeweilige Tonbetriebsart kennzeichnenden Pilotträgers mit den Tonbetriebsarten zugeordneten Kenntönen bzw. Kennfrequenzen, wobei die integrierte Schaltung unter anderem einen Kenntonausgang, einen Kenntoneingang sowie einen Zwangsmonoeingang besitzt, insbesondere unter Verwendung der integrierten Schaltung TDA 4940, dadurch gekennzeich net, daß die Störspannung am Kenntonausgang (16) zur Ansteuerung eines Schalters (36) herangezogen ist, durch welchen wahlweise der Kenntoneingang (11) oder der Zwangsmonoeingang (7) stummschaltbar sind, wodurch die Tonbetriebs art "Mono" einschaltbar ist.

2. Schaltungsanordnung nach Anspruch 1, dadurch ge kennzeichnet, daß der Schalter (36) erst oberhalb einer Schwellspannung am Kenntonausgang (16) aktivierbar ist.

3. Schaltungsanordnung nach Anspruch 1 oder 2, da durch gekennzeichnet, daß der Kenntonausgang (16) mit einem Gleichrichter (32) verbunden ist, dessen Ausgang zu dem Schalter (36) führt.

4. Schaltungsanordnung nach Anspruch 3, dadurch ge kennzeichnet, daß der Kenntonausgang (16) über einen Hochpaß (34) mit dem Gleichrichter (32) verbunden ist.

5. Schaltungsanordnung nach einem der vorhergehenden Ansprüche 3 - 4, dadurch gekennzeichnet, daß dem Gleichrichter (32) ein Verstärker (64) vorgeschaltet ist.

6. Schaltungsanordnung nach einem der vorhergehenden Ansprüche 1 - 5, dadurch gekennzeichnet, daß der Schalter (36) ein elektronischer Schalter in Form eines Transistors (52; 80) ist.

7. Schaltungsanordnung nach Anspruch 6, dadurch ge kennzeichnet, daß der Collektor des Transistors (52; 80) mit dem Kenntoneingang (11) verbunden ist.

8. Schaltungsanordnung nach Anspruch 6, dadurch ge kennzeichnet, daß der Kollektor des Transistors (52; 80) mit dem Zwangsmonoeingang (7) verbunden ist.

## Claims

1. Circuit arrangement for monoaural, stereo or two-channel operation in a television receiver, comprising an integrated circuit for evaluating a pilot carrier identifying the respective audio operating mode with identification tones or identification frequencies allocated to the audio operating modes, the integrated circuit having, among other things, an identification tone output, an identification tone input and a mandatory monoaural input, particularly using the integrated circuit TDA 4940, characterized in that the interference voltage at the identification tone output (16) is utilized for operating a switch (36) by means of which the identification tone input (11) or the mandatory monoaural input (7) can be optionally muted, as a result of which the audio operating mode "mono" can be switched on.

2. Circuit arrangement according to Claim 1, characterized in that the switch (36) can only be activated above a threshold voltage at the identification tone output (16).

3. Circuit arrangement according to Claim 1 or 2, characterized in that the identification tone output (16) is connected to a rectifier (32) the output of which leads to the switch (36).

4. Circuit arrangement according to Claim 3, characterized in that the identification tone output (16) is connected to the rectifier (32) via a high-pass filter (34).

5. Circuit arrangement according to one of the preceding claims 3 - 4, characterized in that the rectifier (32) is preceded by an amplifier (64).

6. Circuit arrangement according to one of the preceding claims 1 - 5, characterized in that the switch (36) is an electronic switch in the form of a transistor (52; 80).

7. Circuit arrangement according to Claim 6, characterized in that the collector of the transistor (52; 80) is connected to the identification tone input (11).

8. Circuit arrangement according to Claim 6, characterized in that the collector of the transistor (52; 80) is connected to the mandatory monoaural input (7).

## Revendications

1. Circuit pour le fonctionnement en mode mono, stéréo ou bisonique d'un récepteur de télévision avec circuit intégré pour exploiter une porteuse pilote caractérisant un mode son correspondant, avec des sons ou des fréquences caractéristiques associés aux modes de fonctionnement son, le circuit intégré ayant entre autre une sortie de son caractéristique, une entrée de son caractéristique ainsi qu'une entrée mono forcée, notamment en utilisant un circuit intégré (TDA 4940), caractérisé en ce que la tension parasite à la sortie de son caractéristique (16) est utilisée pour commander un commutateur (36) qui commute sélectivement l'entrée de son caractéristique (11) ou l'entrée mono forcée (7), pour brancher le mode son mono.

2. Circuit selon la revendication 1, caractérisé en ce que le commutateur (36) n'est mis en oeuvre qu'au-dessus d'une tension de seuil à la sortie de son caractéristique (16).

3. Circuit selon la revendication 1 ou 2, caractérisé en ce que la sortie de son caractéristique (16) est reliée à un redresseur (32) dont la sortie aboutit au commutateur (36).

4. Circuit selon la revendication 3, caractérisé en ce que la sortie de son caractéristique (16) est reliée par un filtre passe-haut (34) au redresseur (32).

5. Circuit selon l'une des revendications précédentes 3-4, caractérisé en ce que le redresseur (32) est précédé d'un amplificateur (64).

6. Circuit selon l'une des revendications précédentes 1 à 5, caractérisé en ce que le commutateur (36) est un commutateur électrique constitué par un transistor (52, 80).

7. Circuit selon la revendication 6, carac térisé en ce que le collecteur du transistor (52, 80) est relié à l'entrée de son caractéristique (11).

8. Circuit selon la revendication 6, caractérisé en ce que le collecteur du transistor (52, 80) est relié à l'entrée mono forcée (7).

FIG.1

FIG.2

FIG. 3

FIG. 4